Europäisches Patentamt

European Patent Office

Office européen des brevets

(19)

(11) Numéro de publication : **0 061 961**
**B1**

(12)

# FASCICULE DE BREVET EUROPÉEN

(45) Date de publication du fascicule du brevet :
30.10.85

(51) Int. Cl.⁴ : **F 16 D 65/52**

(21) Numéro de dépôt : **82400493.1**

(22) Date de dépôt : **18.03.82**

(54) **Frein à tambour à réglage automatique.**

(30) Priorité : **31.03.81 FR 8106445**

(43) Date de publication de la demande :
**06.10.82 Bulletin 82/40**

(45) Mention de la délivrance du brevet :
**30.10.85 Bulletin 85/44**

(84) Etats contractants désignés :
**DE FR GB IT**

(56) Documents cités :
**EP-A- 0 014 632**
**FR-A- 2 216 857**
**FR-A- 2 365 060**
**GB-A- 1 022 467**
**GB-A- 1 268 339**

(73) Titulaire : **BENDIX France**
**Centre Paris Pleyel**
**F-93521 St-Denis Cedex 01 (FR)**

(72) Inventeur : **Carré, Jean-Jacques**
**59 Bld de l'Est**
**F-93340 Le Raincy (FR)**

(74) Mandataire : **Poidatz, Emmanuel et al**
**Service Brevets Bendix 44 rue François 1er**
**F-75008 Paris (FR)**

Jouve, 18, rue St-Denis, 75001 Paris, France

## Description

L'invention a pour objet un frein à tambour à réglage automatique, notamment pour véhicule automobile.

L'invention concerne généralement un frein à tambour comportant deux segments sollicités élastiquement en appui à l'une de leurs extrémités contre un bloc d'ancrage et actionnés à leurs autres extrémités par un moteur de frein, un levier de réglage monté pivotant sur un desdits segments et coopérant avec un embrayage unidirectionnel assure le rattrapage de l'usure des éléments de friction.

Les freins à tambour de ce type sont susceptibles de produire un surréglage dû aux déformations mécaniques des éléments constitutifs du frein au cours du freinage. On est alors obligé d'augmenter le jeu existant entre les éléments de friction et le tambour tournant pour éviter d'obtenir un couple résiduel, ceci entraîne une augmentation de la course de la pédale du frein.

On a essayé de résoudre ce problème en réalisant un dispositif qui bloque le réglage automatique lorsque le frein est soumis à un couple. (Voir en particulier le brevet français FR-A-2 216 857, correspondant au préambule de la revendication 1.) Dans ce brevet il est proposé d'ajouter au niveau du contact entre un segment et un bloc d'ancrage un levier prenant appui d'une part sur le bloc d'ancrage et d'autre part sur un cliquet du dispositif de réglage automatique. Pour que le dispositif de réglage automatique puisse être mis en œuvre, le segment doit pouvoir s'écarter du bloc d'ancrage sous l'effet du levier, et donc tout réglage est impossible dès l'apparition d'un couple de freinage.

Ce dispositif évite effectivement de surrégler lors des applications de freinage ; il présente néanmoins les inconvénients de nécessiter un levier et un axe supplémentaires et de donner un positionnement incertain du segment après éloignement de celui-ci de son bloc d'ancrage pour permettre au réglage automatique de fonctionner.

Pour éviter ces inconvénients, l'invention propose un frein à tambour comportant deux segments sollicités élastiquement en appui à une de leurs extrémités contre un bloc d'ancrage et actionnés à leurs autres extrémités par un moteur de frein, un levier de réglage monté pivotant sur un desdits segments et coopérant avec un dispositif d'embrayage unidirectionnel définissant une direction de réglage et une direction de blocage ; ledit levier de réglage étant sollicité par des moyens élastiques sollicitant ledit embrayage unidirectionnel dans la direction de réglage, lesdits moyens élastiques comprenant une entretoise placée entre lesdits deux segments liée d'une part audit levier de réglage et prenant appui d'autre part sur l'autre desdits segments au moyen d'un ressort de rappel des segments, et comprenant un ressort de réglage lié à l'autre segment sollicitant ladite entretoise en appui sur ledit autre segment, caractérisé en ce que le moteur de frein coopère avec un desdits segments au travers dudit levier de réglage en sollicitant ledit dispositif d'embrayage unidirectionnel dans la direction de blocage, et en ce que lesdits moyens élastiques appliquent audit levier de réglage un effort tel que le moment dudit effort par rapport à l'axe de pivotement dudit levier de réglage est inférieur au moment appliqué sur ledit levier par l'effort fourni par ledit moteur de frein lorsque celui-ci sollicite lesdits segments en appui contre un tambour, ledit levier sollicitant alors ledit dispositif d'embrayage unidirectionnel dans la direction de blocage.

Comme on le verra plus précisément dans la description qui va suivre, l'invention permet de supprimer toute pièce supplémentaire tout en évitant un surréglage du frein, et ceci sans risque d'un positionnement incertain des segments par rapport au bloc d'ancrage.

On décrira à titre d'exemple non limitatif un mode de réalisation préféré de l'invention en se référant aux figures annexées dans lesquelles :

La Figure 1 est une vue de face d'un frein à tambour réalisé conformément à l'invention ; et

La Figure 2 est une vue en coupe du frein de la Figure 1 suivant la ligne I-I de la Figure 1.

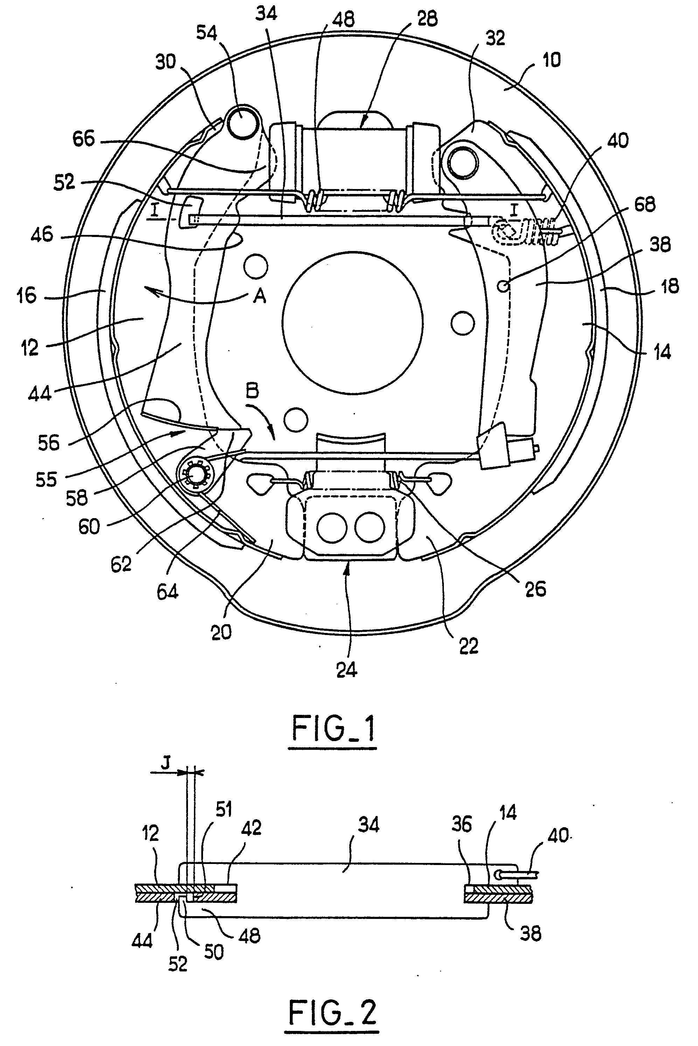

Le frein à tambour représenté sur les figures 1 et 2 comporte une plaque support de frein 10 prévue pour être associée à une partie fixe du véhicule (non représentée). Cette plaque support 10 reçoit en coulissement deux segments 12 et 14 comportant sur leur périphérie un matériau de friction 16 et 18 respectivement maintenus sur les segments au moyen de rivets ou équivalents (non représentés). Les extrémités 20 et 22 respectivement des segments 12 et 14 sont maintenues appliquées sur un bloc d'ancrage 24 au moyen d'un ressort 26. Un moteur de frein désigné dans son ensemble par la référence 28 formé dans le mode de réalisation représenté par un cylindre de roue hydraulique est placé entre les extrémités 30 et 32 respectivement des segments 12 et 14. Une entretoise 34 est placée entre les segments 12 et 14 au voisinage du moteur de frein 28. Comme le montre plus particulièrement la figure 2, l'entretoise 34 comporte à une de ses extrémités une encoche 36 dans laquelle sont placés d'une part, le segment 14 et d'autre part, un levier de frein à main 38 sur lequel l'entretoise 34 vient en appui au moyen du ressort 40 fixé par ailleurs sur le segment 14. A l'autre de ses extrémités, l'entretoise 34 comporte une deuxième encoche 42 qui reçoit le segment 12 et un levier de réglage automatique 44. L'entretoise 34 est maintenue en appui sur la saillie 46 du levier 44 au moyen d'un ressort de rappel de segment 48. L'entretoise 34 comporte, sur un prolongement 48, une saillie 50 qui pénètre dans une ouverture 52 formée dans le levier 44, comme on le voit plus spécialement sur la figure 2, la saillie 50 définie avec un bord interne 51 de l'ouverture 52 un jeu fonctionnel J. Le levier de réglage automatique 44 est monté pivotant sur le segment 12 au moyen d'un axe formant pivot 54 au voisinage de l'extrémité 30 du segment 12.

L'extrémité libre du levier de réglage 44 coopère avec un dispositif d'embrayage unidirectionnel 55 formé par un secteur denté 56, porté par l'extrémité libre du levier 44, s'engageant dans un secteur denté 62 porté par un cliquet 58 monté pivotant sur l'âme du segment 12 au moyen d'un axe formant pivot 60, le secteur denté 62 étant maintenu au contact du secteur denté 56 au moyen d'un ressort de torsion 64. La zone de contact des secteurs dentés 56 et 62 est placée vers l'intérieur du frein par rapport à la ligne qui relie les axes 54 et 60 définissant ainsi une direction de blocage suivant la direction de la flèche A et une direction de réglage suivant la direction inverse à la flèche A, le cliquet 58 étant alors susceptible de s'effacer dans la direction de la flèche B à l'encontre du ressort 64 pour permettre le passage des dents. Le levier de réglage automatique 44 comporte une deuxième saillie 66 placée entre l'axe 54 et la première saillie 46 de manière à se trouver en vis-à-vis du cylindre de roue 28.

Le fonctionnement du frein qui vient d'être décrit est le suivant :

Lorsqu'on introduit du fluide sous pression dans le cylindre de roue 28, les segments de frein 12 et 14 s'écartent jusqu'à ce que leur garniture 16 et 18 vienne en contact avec le tambour (non représenté). En effet, le levier de réglage automatique 66 est sollicité en pivotement dans le sens de la flèche A par le cylindre de roue 28, mais cette direction A correspond à la direction dans laquelle le dispositif d'embrayage unidirectionnel formé par les dentures 56 et le cliquet 58 est dans sa position de blocage, le segment 12 est donc écarté du cylindre de roue 28 au travers de l'axe formant pivot 54. Le segment 14 étant directement écarté du cylindre de roue 28 par son extrémité 32. L'entretoise 34 est sollicitée par le ressort 40 pour rester en contact avec le bord interne du levier de frein à main 38, et suivre le mouvement du segment 14.

Si, pour que les garnitures 16 et 18 des segments 12 et 14 viennent en contact avec le tambour, le déplacement entre l'entretoise 34 et le levier de réglage 44 est supérieur au jeu J existant entre la saillie 50 et le bord interne 51 de l'ouverture 52 prévue dans le levier de réglage 44, la saillie 50 vient en contact avec le bord interne 51. Le levier de réglage 44 est alors sollicité en pivotement dans la direction contraire à celle de la flèche A par l'ensemble entretoise 34 et ressort 40.

Le levier 44 est soumis à deux moments antagonistes par rapport à son axe de pivotement 54, l'un engendré par l'effort du cylindre de roue appliqué à la saillie 66 et tendant à faire pivoter le levier 44 dans le sens de la flèche A, l'autre engendré par le ressort 40 au travers de l'entretoise 34 appliqué sur le bord interne 51 de l'ouverture 52 et tendant à faire pivoter le levier 44 dans la direction inverse à celle de la flèche A. Le ressort 40 est dimensionné de manière à ce qu'il

fournisse un moment supérieur au moment exercé par le cylindre de roue 28 sur la saillie 66, ce moment étant une fonction du ressort 48 et de l'effort nécessaire à la mise en œuvre du dispositif d'embrayage unidirectionnel.

Le levier de réglage 44 est entraîné par le segment 14 au travers du ressort 40 et de l'entretoise 34 et donc, lorsque les segments s'écartent avant de venir en contact de friction avec le tambour, le levier 44 pivote dans le sens contraire de la flèche A.

Lorsque les éléments de friction 16 et 18 sont en contact avec le tambour (non représenté), tout déplacement supplémentaire des segments 12 et 14 correspond à un accroissement de l'effort appliqué sur la saillie 66 par le cylindre de roue 28.

Le ressort 40 est dimensionné de manière à ce qu'il fournisse un moment inférieur à celui fourni par le cylindre de roue 28 lorsque ce dernier presse les éléments de friction contre le tambour (non représenté). Le ressort 40 étant dans l'impossibilité de s'opposer au mouvement du levier 44 dans la direction A, le levier 44 travaille dans la direction où le dispositif d'embrayage unidirectionnel est dans sa direction de blocage et donc le levier 44 reste solidaire du segment 12. Toute course supplémentaire des segments correspond alors à un allongement du ressort 40 et ceci sans mouvement du levier 44 par rapport au segment 12.

Lorsque la pression hydraulique diminue dans le cylindre de roue 28 dans un premier temps les segments se rapprochent, le cylindre de roue 28 maintenant un effort suffisant sur le levier 44 pour s'opposer à l'action du ressort 40. Dans un deuxième temps, l'entretoise 34 et plus précisément la saillie 50 s'écarte du bord 51 de l'ouverture 52 rendant ainsi inopérant le ressort 40. Lorsque la pression hydraulique s'annule dans le cylindre de roue 28 les segments 12 et 14 sont venus en appui sur l'entretoise 34 respectivement au travers du levier de réglage 44 et du levier de frein à main 38 dont la position de repos est définie par la saillie 68 venant en appui sur le segment 14.

On remarquera que dans un tel frein un surréglage dû aux déformations supérieures au jeu J prédéterminé entre la saillie 50 et le bord interne 51 de l'ouverture 52 est rendu impossible car le dispositif de réglage est neutralisé dès l'apparition d'une pression prédéterminée sur les éléments de friction, le levier 44 sollicitant l'embrayage unidirectionnel dans la direction de blocage et ceci au moyen d'un dimensionnement judicieux du ressort 40 qui s'allonge pour un effort prédéterminé fourni par le cylindre de roue.

On comprendra que tout surréglage dû aux déformations étant impossible, le jeu fonctionnel peut être diminué et ceci sans adjonction de composants supplémentaires.

**Revendications**

1. Frein à tambour comportant deux segments (12, 14) sollicités élastiquement en appui à une de leurs extrémités (20, 22) contre un bloc d'ancrage (24) et actionnés à leurs autres extrémités (30, 32) par un moteur de frein (28), un levier de réglage (44) monté pivotant sur un desdits segments (12) et coopérant avec un dispositif d'embrayage unidirectionnel (55) définissant une direction de réglage et une direction de blocage (A), ledit levier de réglage (44) étant sollicité par des moyens élastiques (34, 40) sollicitant ledit embrayage unidirectionnel (55) dans la direction de réglage, lesdits moyens élastiques (34, 40) comprenant une entretoise (34) placée entre lesdits deux segments (12, 14) liée d'une part audit levier de réglage (44) et prenant appui d'autre part sur l'autre (14) desdits segments (12, 14) au moyen d'un ressort de rappel des segments (48), et comprenant un ressort de réglage (40) lié à l'autre segment (14) sollicitant ladite entretoise (34) en appui sur ledit autre segment (14), caractérisé en ce que le moteur de frein (28) coopère avec l'un (12) desdits segments (12, 14) au travers dudit levier de réglage (44) en sollicitant ledit dispositif d'embrayage unidirectionnel (55) dans la direction de blocage (A), et en ce que lesdits moyens élastiques (34, 40) appliquent audit levier de réglage (44) un effort tel que le moment dudit effort par rapport à l'axe de pivotement (54) dudit levier de réglage (44) est inférieur au moment appliqué sur ledit levier (44) par l'effort fourni par ledit moteur de frein (28) lorsque celui-ci sollicite lesdits segments (12, 14) en appui contre un tambour, ledit levier (44) sollicitant alors ledit dispositif d'embrayage unidirectionnel (55) dans la direction de blocage (A).

2. Frein à tambour suivant la revendication 1, caractérisé en ce que ledit moteur de frein (28) coopère avec ledit levier de réglage (44) en un point (66) dudit levier (44) situé entre l'axe de pivotement (54) dudit levier (44) et un point (46-51) du levier (44) assurant la liaison avec lesdits moyens élastiques (34, 40).

3. Frein à tambour suivant l'une des revendications 1 ou 2, caractérisé en ce que lesdits moyens élastiques (34, 40) sont liés audit levier de réglage (44) avec un jeu prédéterminé (J).

4. Frein à tambour suivant la revendication 3, caractérisé en ce que le jeu prédéterminé (J) est obtenu d'une façon connue en soi par une saillie (50) réalisée sur un prolongement (48) de ladite entretoise (34) qui pénètre avec un jeu dans une ouverture (52) formée sur le levier de réglage (44), l'entretoise (34) étant au repos en appui sur une saillie (46) dudit levier de réglage (44).

## Claims

1. A brake drum comprising a pair of segments (12, 14) resiliently biased at one of their extremities (20, 22) in abutment with an anchorage block (24) and actuated at their other extremities (30, 32) by a brake motor (28), an adjustment lever (44) pivotally mounted on one of said segments (12) and cooperating with a oneway clutch device (55) defining an adjustment direction and a locking direction (A), said adjustment lever (44) being biased by said resilient means (34, 40) biasing said one-way clutch (55) in the adjustment direction, said resilient means (34, 40) comprising a strut (34) disposed between said two segments (12, 14), connected on the one hand to said adjustment lever (44) and supported on the other hand against the other (14) of said segments (12, 14) by means of a segments return spring (48) and comprising an adjustment spring (40) connected to the other segment (14) to bias said strut (34) in abutment with said other segment (14), characterized in that the brake motor (28) cooperates with the one (12) of said segments (12, 14) via said adjustment lever (44) by biasing said one-way clutch device (55) in the locking direction (A), and in that said resilient means (34, 40) apply to said adjustment lever (44) a force such that the torque of said force with respect to the pivot axis (54) of said adjustment lever (44) is less than the torque applied upon said lever (44) by the force generated by said brake motor (28) when the latter urges said segments (12, 14) against a drum, said lever (44) biasing said oneway clutch device (55) in the locking direction (A).

2. Drum brake according to claim 1, characterized in that said brake motor (28) cooperates with said adjustment lever (44) at a point (66) of said lever (44) situated between the pivot axis (54) of said lever (44) and a point (46-51) of the lever (44) ensuring the connection with said resilient means (34, 40).

3. Drum brake according to claim 1 or claim 2, characterized in that said resilient means (34, 40) are connected to said adjustment lever (44) with a predetermined play (J).

4. Drum brake according to claim 3, characterized in that said predetermined play (J) is obtained in a manner known per se by a projection (50) provided by an extension (48) of said strut (34) which penetrates with play into an opening (52) formed on the adjustment lever (44), the strut (34) in rest position being in abutment with a projection (46) of said adjustment lever (44).

## Patentansprüche

1. Trommelbremse mit zwei Bremsbacken (12, 14) die mit einem ihrer Enden (20, 22) elastisch gegen einen Verankerungsblock (24) vorgespannt sind und an ihren anderen Enden (30, 32) von einem Bremsmotor (28) betätigt werden, einem Nachstellhebel (44), der an einem der Bremsbacken (12) angelenkt ist und mit einer Einwegkupplung (55) zusammenwirkt, die eine Nachstellrichtung und eine Sperrichtung (A) definiert, wobei der Nachstellhebel (44) von elastischen Mitteln (34, 40) vorgespannt wird, die die Einwegkupplung (55) in der Nachstellrichtung vorspannen, wobei die elastischen Mittel (34, 40) eine zwischen den beiden Bremsbacken (12, 14) angeordnete Strebe (34) aufweisen, die einerseits mit dem Nachstellhebel (44) verbunden und andererseits an dem anderen (14) der Bremsbacken (12, 14) mittels einer Bremsbacken-Rückholfeder (48) abgestützt ist, und mit einer mit dem anderen Bremsbacken (14) verbundenen Nachstellfeder (40), die die Strebe (34) in Anlage an den anderen Bremsbacken (40) vorspannt, dadurch gekennzeichnet, daß der Bremsmotor (28) mit dem einen (12) der Bremsbacken (12, 14) über den Nachstellhebel (44) so zusammenwirkt, daß er die Einwegkupplung (55) in die Sperrichtung (A) vorspannt, und daß die elastischen Mittel (34, 40) auf den Nachstellhebel (44) eine solche Kraft ausüben, daß das Drehmoment dieser Kraft bezüglich der Schwenkachse (54) des Nachstellhebels (44) kleiner ist als das Moment, das auf den Nachstellhebel (44) von der Kraft ausgeübt wird, die von dem Bremsmotor (28) erzeugt wird, wenn dieser die Bremsbacken (12, 14) gegen eine Bremstrommel andrückt, wobei der Nachstellhebel (44) nun die Einwegkupplung (55) in die Sperrichtung (A) vorspannt.

2. Trommelbremse nach Anspruch 1, dadurch gekennzeichnet, daß der Bremsmotor (28) mit dem Nachstellhebel (44) an einem Punkt (66) des Nachstellhebels (44) zusammenwirkt, der zwischen der Schwenkachse (54) des Hebels (44) und einem die Verbindung mit den elastischen Mitteln (34, 40) sichernden Punkt (46-51) des Nachstellhebels (44) liegt.

3. Trommelbremse nach Anspruch 1 oder 2, dadurch gekennzeichnet, daß die elastischen Mittel (34, 40) an dem Nachstellhebel (44) mit einem vorgegebenen Spiel (J) angebracht sind.

4. Trommelbremse nach Anspruch 3, dadurch gekennzeichnet, daß das vorgegebene Spiel (J) in an sich bekannter Weise von einem Vorsprung (50) erzeugt wird, der an einer Verlängerung (48) der Strebe (34) vorgesehen ist, die mit Spiel in eine Öffnung (52) am Nachstellhebel (44) vorsteht, wobei die Strebe (34) in der Ruhestellung an einem Vorsprung (46) des Nachstellhebels (44) anliegt.

FIG_1

FIG_2

1